# EUROPEAN PATENT SPECIFICATION

(11) **EP 2 687 648 B1**
(45) Date of publication and mention of the grant of the patent: **27.05.2015**
(21) Application number: 13177426.7
(22) Date of filing: 22.07.2013
(51) Int. Cl.: E04F 10/08, E06B 7/082, E06B 9/386, E04F 10/10, A01G 9/02, E06B 9/26, E06B 9/40

(54) **Self-supporting structure for supporting slats for building façades**
Freitragende Struktur zum Tragen von Lamellen für Fassaden
Structure autoportante pour soutenir des lattes pour des façades

(30) Priority: 20.07.2012 ES 201231169
(43) Date of publication of application: 22.01.2014
(73) Proprietor: Urban Green Design, S.L., 08840 Cardedeu (ES)
(72) Inventor: Rocarols Escobedo, Marina, 08840 CARDEDEU (ES); Arbós Bellapart, Francesc, 08840 CARDEDEU (ES)
(74) Representative: Alier Benages, Elisabet

(56) References cited:
- EP-A2- 1 321 621
- EP-A2- 1 939 388
- EP-A2- 2 060 734
- FR-A1- 2 872 382

## Description

The current invention refers to a self-supporting structure for holding slats for buildings facades of high modulation possibilities, high aesthetic and multifunctional quality.

### Precedent to the invention

Self-supporting structures which hold slats for building facades are well known. They have at least two pillars, cross-wise beams to join the pillars and slats attached to the beams. The slats, shading elements known which consist in elements generally with flat or nearly flat shape, give shade, especially in summer.

The applicant knows that the following documents shown:
- EP1321621A2: shows a self-supporting structure for supporting slats for building facades, comprising at least two pillars, transverse beams for connection between pillars, and a plurality of blades attached to the beams. The profile of the blade is not concave upward so that it not may contain a substrate for the growth of plants, so that the slats are not plant boxes.
- EP2060734A2: shows (fig 2) an antiglare device, which device has multiple elongated light defecting blades arranged on top of each other, which are designed on upper side in light reflecting manner and curved particularly concave on upper side in cross section. However, these blades are suitable for deflecting sunlight and they would not considerer these blades for filling them with a plant growth substrate.
- EP1939388A2: shows (fig. 1 and 2) a sunshade louver for controlling light or ventilation through an architectural opening, the louver having a support bar to which holding brackets are attached, which lover has neither a concave profile nor an open receptacle suitable for receiving plant substrate.

Also the Green facades are known, that is to say with plants, for example through the publications DE20005091U1, FR2872382 o FR 2309673.

Both solutions can be assembled as a solution added a posteriori to the external skin of the building or it can be built with it. However, the applicant has checked that there are not structures which provide the advantages of both systems, that is, protection through slats and through plants.

### Invention description

To fulfil the technical stage shortages, the present invention proposes a self-supporting structure which holds slats for building facades. They have at least two pillars, cross-wise beams to join pillars and slats attaches to the beams. The main characteristic is that the slats have declining height profile in the sense of distancing the beam, having the slat a relation between deep and height comprised between 1.1 and 4.4, the slat profile being concave directed towards up so that the slats can contain substrate to grow plants, in such way that the mentioned slats become plant boxes as well.

According to various optional features of the invention, taken individually or in combination whenever technically possible:
- The slats comprise side holes for irrigation and drainage on its sides, which are connected with pipes that run inside the pillars.
- The beams are hollow and comprise a lower opening so that shutters can be fixed therein, down through said lower opening.
- The beams comprise a longitudinal superior accommodation and superior longitudinal opening for accommodation and passage way respectively for artificial lighting .

- The structure comprises data transmission cables in the beams and columns, so that it is possible to transmit the signals from sensors arranged on the slats.
- The structure comprises electricity transmission cables.
- The blades are bent sheet metal or reinforced plastic, preferably obtained by molding.
- One or more of the beams comprise fixed blades on both sides.
- The beams have a substantially trapezoidal section, the base being curved to protrude downward and is wider than the upper side, the two remaining sides inclined paths to form bearing surfaces of the slats.
- Finally, the blades have a depth of between 20 cm and 80 cm.

### Brief description of the figures

For better understanding of what has been disclosed some drawings are attached in which, schematically and solely by way of non-limiting example, is represented a practical case of fulfillment.
Figure 1 is a perspective view which shows the basic components of the structure of the invention.
Figure 2 is a section of a fulfillment with a single blade on one side.
Figure 3 is a perspective of a fulfillment which provides for the passage of cables for data and/or electricity through the interior of the beam and a roller blind inside.

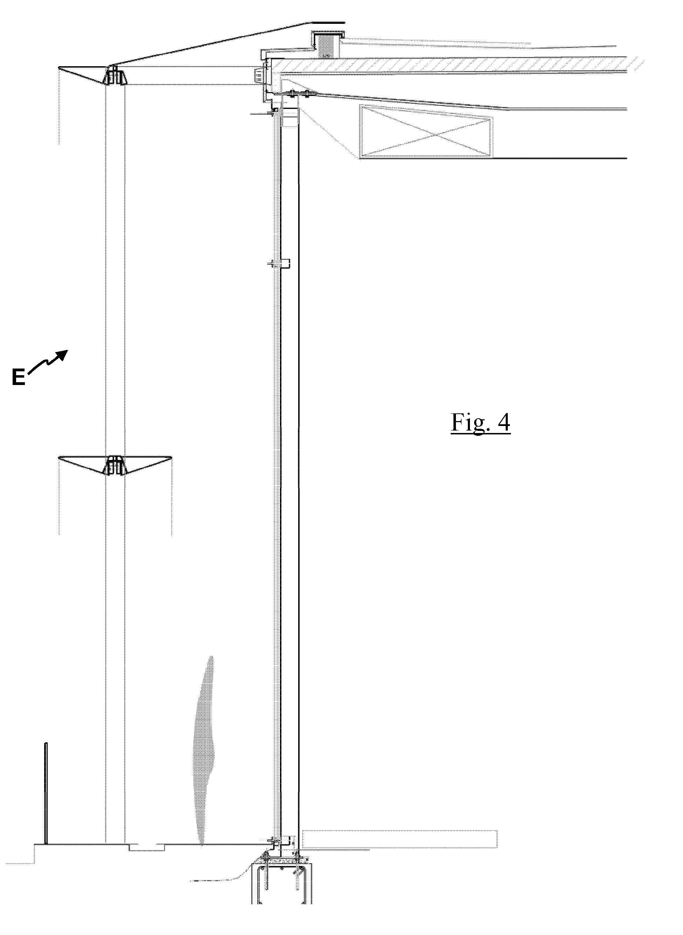

Figure 4 is a section of an entire structure intended for long heights hanging plants.
Figure 5 is a fulfillment in which the plants hang less, and where beams are provided with blades on one side or both.
Figure 6 shows a perspective of the structure of Figure 5.

### Description of a preferred fulfillment

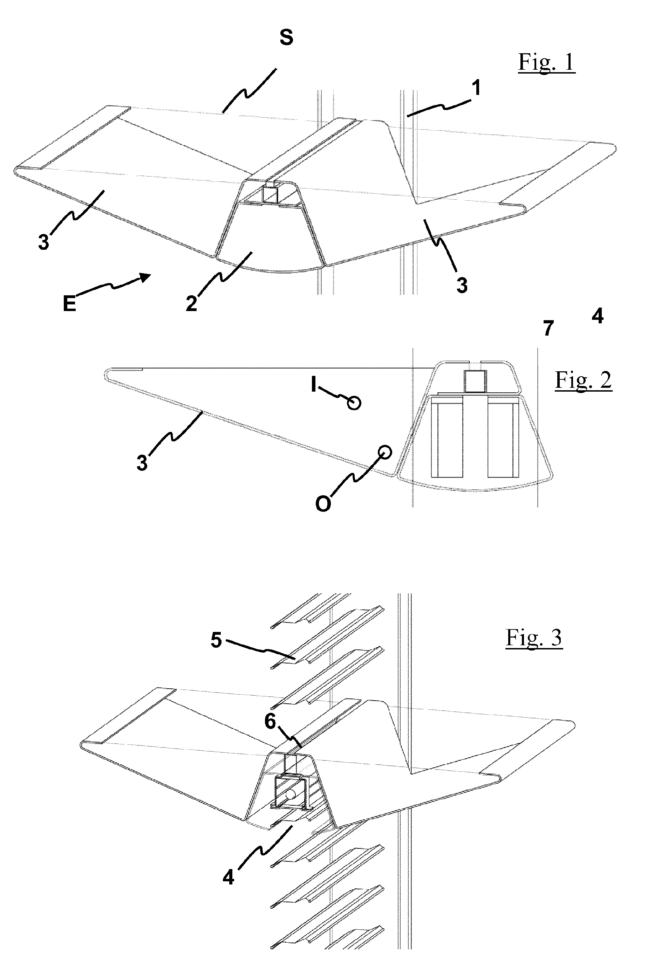

As can be seen in Figure 1, the invention generally relates to a self-supporting structure E for supporting slats 3 for building facades, comprising at least two pillars 1, cross beams 2 connecting between pillars 1, slats 3 secured to the beams 2.

Specifically, the invention is characterized by the fact that the slats 3 have a profile height decreasing in the direction away from the beam 2, the slats having a relationship between depth and height of between 1.1 and 4.4, where the profile of the blade 3 concave upward so that it may contain a substrate S for plant growth, so that the slats are also plant boxes.

As seen in section in Figure 2, the slats 3 comprise lateral holes for irrigation I and drainage O at the sides, which are connected with a piping extending through the inside of the pillars 1.

According to a particularly preferred variant, the beams 2 are hollow and comprise a lower opening 4, so that is possible to fix shutters 5 inside, unfoldable down through said lower opening 4 as shown in Figure 3.

Also visible in Figure 3, may be provided on the beams a longitudinal superior accommodation and a superior longitudinal opening 6 for accommodation and way respectively for artificial lighting.

Preferably also be provided a data transmission cable in the beams 2 and the pillars 1, so that it is possible to transmit the signals of sensors disposed on the slats 3. These may be humidity sensors, for example.

You can also provide electricity transmission cables, for enlightenment blinds or under the beams.

As seen in all figures, slats 3 are folded plate, with closing sides also made of plate, for stiffening and closing laterally the volume of plant boxes.

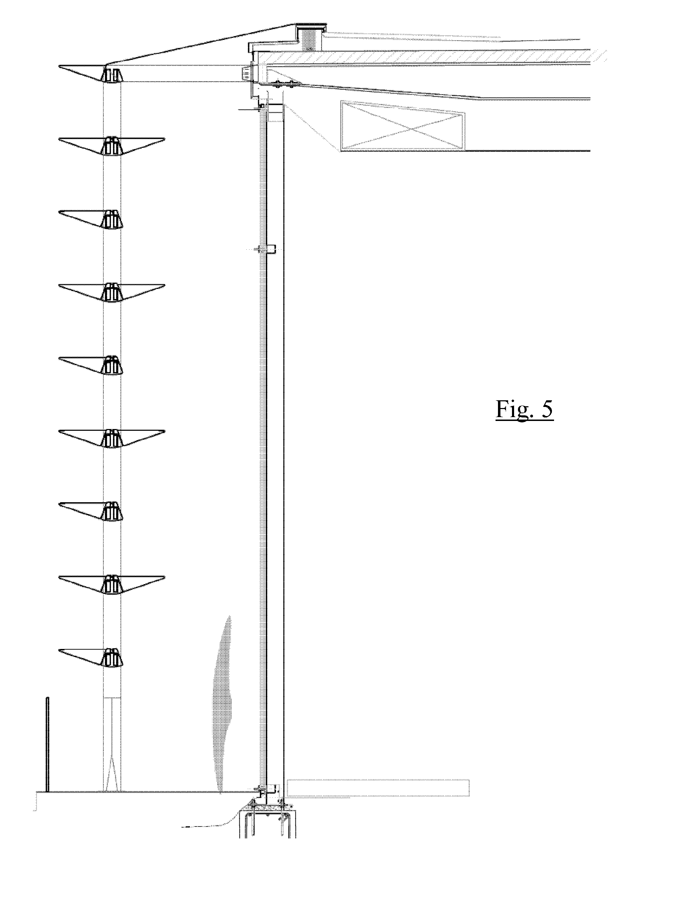

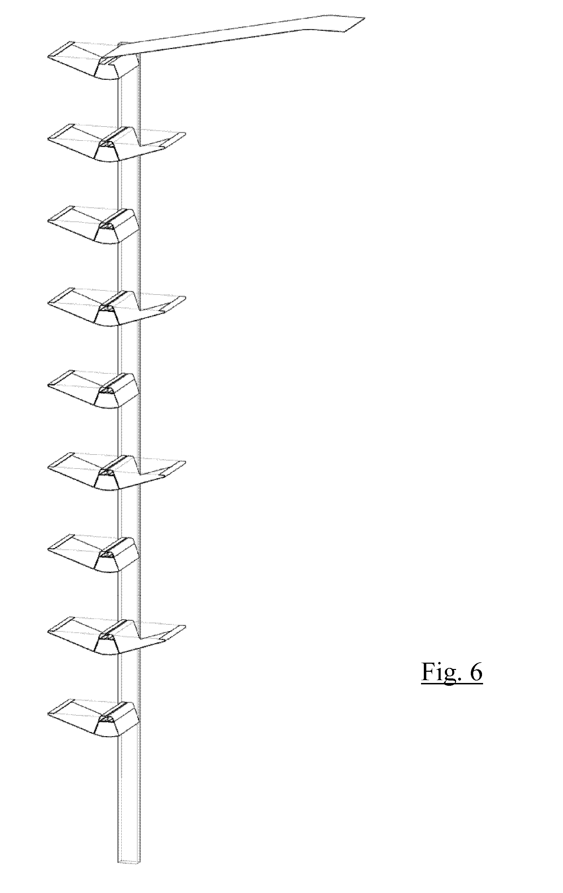

As seen in Figures 5 and 6, one or more blades 2 comprise beams 3 fixed on both sides. Also preferably, and as seen in Figure 2, the beams 2 have a substantially trapezoidal section, the base being curved to protrude downward and is wider than the upper side, the two remaining sides inclined surfaces to form paths slat support.

As preferred dimensions, the blades 1 have a depth of between 20 cm and 80 cm. Although reference has been made to a specific embodiment of the invention, it is apparent to one skilled in the art that the structure described is susceptible to numerous variations and modifications, and that all the details mentioned can be replaced by other technically equivalent without departing from the scope of protection defined by the appended claims.

## Claims

1. Self-supporting structure (E) for building facades, comprising at least two pillars (1), transverse beams (2) for connection between pillars (1), a plurality of blades (3) attached to the beams (2), **characterized in that** the blades (3) have a profile with decreasing height in the direction away from the beam (2), the blades having a depth and height ratio comprised in the range between 1.1 and 4.4, with the profile of the blade (3) concave upward so that it may contain a substrate (S) for the growth of plants, so that the slats are also plant boxes.

2. Structure according to claim 1, wherein the blades (3) comprise lateral openings for irrigation (I) and drainage (O) on its sides, which are connected with a piping extending through the inside of the pillars (1).

3. Structure according to any of the preceding claims, wherein the beams (2) are hollow and comprise a lower opening (4), so that is possible to fix shutters (5) therein, down through said lower opening (4).

4. Structure according to any of the preceding claims, wherein the beams (2) comprise an upper housing and a longitudinal opening longitudinal top (6) for housing and passing of artificial lighting respectively.

5. Structure according to any of the preceding claims, comprising data transmission cables in the beams (2) and pillars (1), so that it is possible to transmit signals from sensors arranged on the blades (3).

6. Structure according to any of the preceding claims, comprising power transmission cables.

7. Structure according to any of the preceding claims, wherein the blades (3) are bent sheet.

8. Structure according to any of claims from 1 to 6, wherein the blades (3) are of reinforced plastic.

9. Structure according to any of the preceding claims, wherein one or more beams (2) comprise blades (3) fixed on both sides.

10. Structure according to any of the preceding claims, wherein the beams (2) have a substantially trapezoidal section, the base being curved to protrude downward and being wider than the upper side, the two remaining sides being inclined surfaces to form slat supporting surfaces.

11. Structure according to any of the preceding claims, wherein the slats (1) have a depth between 20 cm and 80 cm.

## Patentansprüche

1. Selbsttragende Struktur (E) zum Bau von Fassaden, umfassend zumindest zwei Säulen (1), Querträger (2) zur Verbindung zwischen Säulen (1), eine Vielzahl an Flügeln (3), weiche an den Trägern (2) befestigt sind, **dadurch gekennzeichnet, dass** die Flügel (3) ein Profil mit abnehmender Höhe in Richtung vom Träger (2) weg haben, wobei die Flügel ein Verhältnis von Tiefe zu Höhe im Bereich zwischen 1,1 und 4,4 haben, wobei das Profil des Flügels (3) nach oben hin konkav ist, so dass es ein Substrat (S) für das Wachstum von Pflanzen enthalten kann, so dass die Flügel auch Pflanzenkästen sind.

2. Struktur nach Anspruch 1, wobei die Flügel (3) an ihren Seiten seitliche Öffnungen zur Bewässerung (l) und Entwässerung (O) aufweisen, welche mit Rohrleitungen verbunden sind, welche sich durch das Innere der Säulen (1) erstrecken.

3. Struktur nach einem der vorherigen Ansprüche, wobei die Träger (2) hohl sind und eine untere Öffnung (4) umfassen, so dass es möglich ist, Rollläden (5) in diesen nach unten durch die genannte untere Öffnung (4) zu fixieren.

4. Struktur nach einem der vorherigen Ansprüche, wobei die Träger (2) ein oberes Gehäuse und eine obere Längsöffnung (6) jeweils zur Aufnahme und zum Durchgang von künstlicher Beleuchtung umfassen.

5. Struktur nach einem der vorherigen Ansprüche, umfassend Datenübertragungskabel in den Trägern (2) und Säulen (1), so dass es möglich ist, Signale von an den Flügeln (3) angeordneten Sensoren zu übertragen.

6. Struktur nach einem der vorherigen Ansprüche, umfassend Stromübertragungskabel.

7. Struktur nach einem der vorherigen Ansprüche, wobei die Flügel (3) gebogenes Blech sind.

8. Struktur nach einem der Ansprüche 1 bis 6, wobei die Flügel (3) aus verstärktem Kunststoff bestehen.

9. Struktur nach einem der vorherigen Ansprüche, wobei einer oder mehrere Träger (2) an beiden Seiten fixierte Flügel (3) umfassen.

10. Struktur nach einem der vorherigen Ansprüche, wobei die Träger (2) einen im Wesentlichen trapezförmigen Abschnitt umfassen, wobei der Boden gekrümmt ist, um nach unten vorzustehen, und breiter als die Oberseite ist, wobei die beiden verbleibenden Seiten geneigte Flächen sind, um Flügelstützflächen zu bilden.

11. Struktur nach einem der vorherigen Ansprüche, wobei die Flügel (1) eine Tiefe zwischen 20 cm und 80 cm haben.

## Revendications

1. Structure autoportante (E) pour des façades de bâtiment, comprenant au moins deux piliers (1), des poutres transversales (2) pour la connexion entre des piliers (1), une pluralité de lames (3) reliées aux poutres (2), **caractérisée en ce que** les lames (3) ont un profil avec une hauteur décroissante dans le sens d'éloignement de la poutre (2), les lames ayant un rapport de profondeur et de hauteur compris dans la fourchette entre 1,1 et 4,4, avec le profil de la lame (3) concave vers le haut de sorte qu'elles puissent contenir un substrat (S) pour la pousse de plantes, de sorte que les lattes sont aussi des jardinières.

2. Structure selon la revendication 1, dans laquelle les lames (3) comprennent une ouverture latérale pour l'irrigation (I) et le drainage (O) sur leurs côtés, qui sont connectés à une canalisation qui s'étend à travers l'intérieur des piliers (1).

3. Structure selon l'une quelconque des revendications précédentes, dans laquelle les poutres (2) sont creuses et comprennent une ouverture inférieure (4), de sorte qu'il soit possible de fixer des clapets (5) sur celle-ci, vers le bas de ladite ouverture inférieure (4).

4. Structure selon l'une quelconque des revendications précédentes, dans laquelle les poutres (2) comprennent un logement supérieur et une ouverture longitudinale supérieure (6) pour le logement et le passage respectifs de lumière artificielle.

5. Structure selon l'une quelconque des revendications précédentes, comprenant des câbles de transmission de données dans les poutres (2) et les piliers (1), de sorte qu'il soit possible de transmettre des signaux depuis des capteurs disposés sur les lames (3).

6. Structure selon l'une quelconque des revendications précédentes, comprenant des câbles de transmission électrique.

7. Structure selon l'une quelconque des revendications précédentes, dans laquelle les lames (3) sont une plaque pliée.

8. Structure selon l'une quelconque des revendications 1 à 6, dans laquelle les lames (3) sont en plastique renforcé.

9. Structure selon l'une quelconque des revendications précédentes, dans laquelle une ou plusieurs poutres (2) comprennent des lames (3) fixées sur les deux côtés.

10. Structure selon l'une quelconque des revendications précédentes, dans laquelle les poutres (2) ont une section sensiblement trapézoïdale, la base étant courbée pour se projeter vers le bas et étant plus large que le côté supérieur, les deux côtés restants étant des surfaces inclinées pour former des surfaces de support de latte.

11. Structure selon l'une quelconque des revendications précédentes, dans laquelle les lattes (1) ont une profondeur d'entre 20 cm et 80 cm.
